(19) **Europäisches Patentamt / European Patent Office / Office européen des brevets**

(11) **EP 4 447 181 A1**

(12) **EUROPEAN PATENT APPLICATION**
published in accordance with Art. 153(4) EPC

(43) Date of publication:
**16.10.2024 Bulletin 2024/42**

(21) Application number: **23907884.3**

(22) Date of filing: **22.12.2023**

(51) International Patent Classification (IPC):
**H01M 10/0562** (2010.01)     **H01M 10/058** (2010.01)
**C01B 25/14** (2006.01)     **H01M 10/052** (2010.01)

(52) Cooperative Patent Classification (CPC):
**H01M 10/0562; H01M 10/052; H01M 10/056;**
H01M 2300/0068; H01M 2300/0082; Y02E 60/10

(86) International application number:
**PCT/KR2023/021461**

(87) International publication number:
**WO 2024/136601 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.12.2022 KR 20220182670**

(71) Applicants:
• **LG Energy Solution, Ltd.**
  **Seoul 07335 (KR)**
• **The Regents of the University of California**
  **Oakland, CA 94607-5200 (US)**

(72) Inventors:
• **LEE, Jung Pil**
  **Daejeon 34122 (KR)**
• **SONG, Min Sang**
  **Daejeon 34122 (KR)**
• **LEE, Dong Ju**
  **La Jolla, California 92092 (US)**
• **CHEN, Zheng**
  **San Diego, California 92130 (US)**

(74) Representative: **Goddar, Heinz J.**
  **Boehmert & Boehmert**
  **Anwaltspartnerschaft mbB**
  **Pettenkoferstrasse 22**
  **80336 München (DE)**

(54) **SOLID ELECTROLYTE MEMBRANE AND ALL-SOLID-STATE BATTERY COMPRISING SAME**

(57)     The present disclosure relates to a solid electrolyte film and an all-solid-state battery including the same, and more particularly, the solid electrolyte film is fabricated by a dry process of physically mixing sulfide-based and/or halide-based solid electrolyte particles with a binder, wherein the binder is fiberized in the dry process and forms fiberized binders in an intertwined state, so that a small amount of binder is sufficient to provide improved ionic conductivity and strength.

[FIG. 1]

**Description**

[Technical Field]

The present application claims the benefit of and priority to Korean Patent Application No. 10-2022-0182670, filed December 23, 2022, the disclosure of which is incorporated herein by reference in its entirety.

The present disclosure relates to a solid electrolyte film and an all-solid-state battery comprising the same.

[Background]

Various batteries are being researched to overcome the limitations of current lithium secondary batteries in terms of capacity, safety, power output, enlargement, and miniaturization.

For example, metal-air batteries with significantly higher theoretical capacity compared to lithium secondary batteries, all-solid-state batteries, which do not have the risk of explosion in terms of safety; supercapacitors in terms of power output; NaS batteries or redox flow batteries (RFB) in terms of large size, and thin film batteries in terms of miniaturization are being continuously researched in academia and industry.

An all-solid-state battery is a battery where the liquid electrolyte used in conventional lithium secondary batteries is replaced with a solid one, eliminating risks of ignition or explosion due to decomposition reactions of traditional electrolytes, thus significantly enhancing safety. Moreover, it has the advantage of drastically improving the energy density in terms of mass and volume by using Li metal or Li alloy as the negative electrode. However, in an all-solid-state battery, safety can be secured by using the solid electrolyte, but ionic conductivity may be reduced. Additionally, when using a liquid electrolyte as a means to ensure the ionic conductivity of the solid electrolyte mentioned above, there is a problem of decreased strength. Generally, to ensure the safety of all-solid-state batteries while avoiding a decline in battery performance and processability, both the ionic conductivity and strength of the solid electrolyte need to be maintained at a certain level or above. However, only a few solid electrolytes have been developed to date that possess the properties of both ionic conductivity and strength.

As the demand for all-solid-state batteries increases, the demand for solid electrolytes contained in all-solid-state batteries increases proportionally, making it necessary to develop solid electrolytes with excellent ionic conductivity and strength.

[Prior Art Reference]

[Patent Document]

(Patent Document 1) Korean Publication No. 2022-0095689

[Disclosure]

[Technical Problem]

The present inventors have conducted a multifaceted study to solve the above problems and have found that it is possible to fabricate a solid electrolyte film with improved ionic conductivity and strength due to the dispersed and intertwined structure of a fiberized binder formed by a dry process of physically mixing a sulfide-based solid electrolyte and/or a halide-based solid electrolyte with a binder.

Accordingly, it is an objective of the present disclosure to provide a solid electrolyte film with improved ionic conductivity and strength.

Another objective of the present disclosure is to provide an all-solid-state battery comprising a solid electrolyte film with improved ionic conductivity and strength.

[Technical Solution]

To achieve the aforementioned objectives, the present disclosure provides a solid electrolyte film comprising a solid electrolyte and a fiberized binder, wherein the solid electrolyte may comprise one or more selected from the group consisting of sulfide-based solid electrolyte and halide-based solid electrolytes.

The present disclosure also provides the above-described solid electrolyte film, wherein: the sulfide-based solid electrolytes may be represented by Formula 1:

<Formula 1>     $L_{a1}M_{b1}P_{c1}S_{d1}A_{e1}$

wherein in Formula 1, L is an element selected from Li, Na, and K; M is an element selected from B, Zn, Sn, Si, Cu, Ga, Sb, Al and Ge; A represents I, Br, Cl or F; a1 to e1 represents the composition ratio of each element; a1:b1:c1:d1:e1 is 1~12:0~1:1:2~12:0~5.

The present disclosure also provides a solid electrolyte film, wherein the halide-based solid electrolytes are represented by Formula 2:

$$<\text{Formula 2}> \qquad Li_{6-3a}M_aBr_bCl_c$$

wherein in Formula 2, M is a metal other than Li, a is $0<a<2$, b is $0 \leq b \leq 6$, c is $0 \leq c \leq 6$, and $b+c=6$.

The present disclosure also provides a solid electrolyte film, wherein the solid electrolyte comprises 98 weight % or more based on a total weight of the solid electrolyte film.

The present disclosure also provides a solid electrolyte film, wherein the fiberized binder comprises one or more selected from a group consisting of polytetrafluoroethylene (PTFE) and copolymers thereof.

The present disclosure also provides a solid electrolyte film, wherein the fiberized binder comprises 2 weight % or less based on a total weight of the solid electrolyte film.

The present disclosure also provides a solid electrolyte film, wherein the fiberized binder is included in the solid electrolyte film in a dispersed state.

The present disclosure also provides a solid electrolyte film, wherein an interface of the solid electrolyte and the fiberized binder is bonded.

The present disclosure also provides a solid electrolyte film, wherein an ionic conductivity of the solid electrolyte film is from 0.5 to 10 S/cm.

The present disclosure also provides a solid electrolyte film, wherein the solid electrolyte film has a tensile strength ranging from 45 to 1000 kPa.

The present disclosure also provides a solid electrolyte film, wherein the solid electrolyte film is solvent-free.

The present disclosure also provides an all-solid-state battery, comprising a positive electrode, a negative electrode, and the aforementioned solid electrolyte film interposed therebetween.

[Advantageous Effects]

The solid electrolyte film according to the present disclosure comprises sulfide-based and/or halide-based solid electrolyte particles and a fiberized binder, and includes a small amount of the fiberized binder, so that the ionic conductivity can be improved due to the relatively high content of solid electrolyte particles.

Additionally, as the solid electrolyte film is formed through a dry process involving physical mixing without using a solvent, the binder is included in a fiberized binder with a fiberized structure, which is intertwined with each other. Therefore, even with a small amount of the fiberized binder, the solid electrolyte film can exhibit excellent tensile strength.

[Brief Description of Drawings]

FIG. 1 is a schematic diagram illustrating the internal structure of a solid electrolyte film according to an embodiment of the present disclosure.

FIG. 2 is a Scanning Electron Microscope (SEM) photograph of a solid electrolyte film according to an embodiment of the present disclosure.

FIG. 3 is a graph showing the correlation of the content of the fiberized binder in a solid electrolyte film and ionic conductivity as well as tensile strength according to an embodiment of the present disclosure.

[Mode for Invention]

Hereinafter, the present disclosure will be described in more detail to provide a better understanding of the present disclosure.

The terms and words used in this specification and the claims are not to be construed in their ordinary or dictionary sense, but are to be construed with a meaning and concept consistent with the technical idea of the present disclosure, based on the principle that the inventor may properly define the concept of a term to best describe his invention.

The term "cross-linked structure", as used in this specification, refers to a structure formed by the intertwining of fiberized binders dispersed in a solid electrolyte film, and may be a three-dimensional structure comprising a frame of fiberized binders and an interior space formed by the frame.

**Solid Electrolyte Film**

The present disclosure relates to a solid electrolyte film.

The solid electrolyte film according to the present disclosure comprises a solid electrolyte and a fiberized binder, wherein the solid electrolyte comprises one or more selected from a group consisting of sulfide-based solid electrolytes and halide-based solid electrolytes.

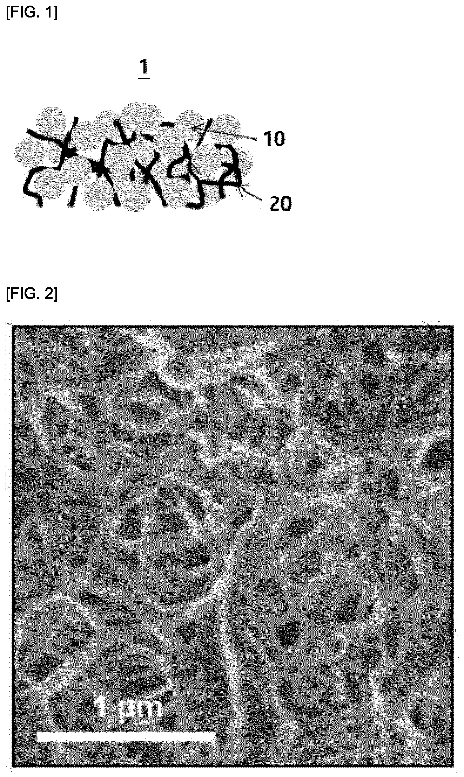

FIG. 1 is a schematic diagram illustrating the internal structure of a solid electrolyte film according to an embodiment of the present disclosure.

Referring to FIG. 1, within the solid electrolyte film 1, the solid electrolyte 10 exists in particle form, and the fiberized binder 20 may be included in a intertwined state. Specifically, the fiberized binder 20 may be dispersed to form an intertwined cross-linked structure. The cross-linked structure includes a frame comprising the fiberized binder 20 and a void, which is a space between the frames, in which solid electrolyte 10 particles may be located. The solid electrolyte 10 may be a sulfide-based and/or halide-based solid electrolyte.

In an embodiment of the present disclosure, the interface of the solid electrolyte and the fiberized binder may be bonded.

As the interface of the solid electrolyte and the fiberized binder is firmly bonded by compression during the fabrication process, it is possible to prevent the strength of the solid electrolyte film from decreasing even though a small amount of the fiberized binder is used. Additionally, since adhesion occurs between the solid electrolytes, it can further contribute to the improvement of the strength of the solid electrolyte film.

In an embodiment of the present disclosure, the ionic conductivity of the solid electrolyte film may range from 0.5 to 10 S/cm. Specifically, the ionic conductivity may be 0.5 S/cm or more, 0.6 S/cm or more, 0.8 S/cm or more, 1 S/cm or more, 1.5 S/cm or more, or 2 S/cm or more, and may be 10 S/cm or less, 8 S/cm or less, 5 S/cm or less, or 3 S/cm or less. The ionic conductivity may be measured at room temperature (25°C).

In an embodiment of the present disclosure, the tensile strength of the solid electrolyte film may range from 45 to 1000 kPa. It may be 45 kPa or more, 50 kPa or more, 80 kPa or more, 100 kPa or more, 120 kPa or more, or 150 kPa or more, and may be 1000 kPa or less, 900 kPa or less, 700 kPa or less, 500 kPa or less, 300 kPa or less, or 200 kPa or less.

In an embodiment of the present disclosure, the solid electrolyte film may be solvent-free.

As the solid electrolyte film is fabricated by a dry process of physical mixing of the sulfide and/or halide solid electrolyte with a binder, it does not contain any solvent. Additionally, compression during the dry process causes the binder to fiberize, and the fiberized binder becomes dispersed and intertwined with each other, forming a cross-linked structure. Accordingly, it is possible to fabricate a solid electrolyte film having improved strength due to the structure formed by the fiberized binder by using only a small amount of the binder.

In addition, since no separate solvent is used, it is possible to prevent a decrease in ionic conductivity resulting from the solvent destroying the crystal structure of the sulfide and/or halide solid electrolyte.

Generally, wet processes performed to fabricate solid electrolyte films use solvents that can dissolve binders, which are positioned between the solid electrolyte particles to provide adhesion.

On the other hand, the dry process according to the present disclosure does not use solvents, but rather physically stretches and fiberizes the initial particulate binder. Thus, the structure of the binder in the fabricated solid electrolyte film is different from the structure formed by the wet process, and the physical properties of the solid electrolyte film or the solid electrolyte film fabricated by the wet process may be improved. In the above, the initial particulate binder is physically deformed by shear forces during the mixing step with the electrolyte particles. Induction of such physical transformation during mixing can be achieved by methods such as agitation, ball milling, or roll pressing. In addition, binders that can be well induced to undergo physical deformation include those that are physically very weak, such as PTFE, which is relatively easy to fiberize.

In an embodiment of the present disclosure, the solid electrolyte may comprise a sulfide-based solid electrolyte and/or a halide-based solid electrolyte.

Additionally, the solid electrolyte may be comprised 98 weight % or more based on the total weight of the solid electrolyte film. Specifically, the content of the solid electrolyte may be 98 weight % or more, 98.5 weight % or more, or 99 weight % or more. If the content of the solid electrolyte is less than 98 weight %, the ionic conductivity of the solid electrolyte film may be reduced. Additionally, the upper limit of the solid electrolyte content is not particularly limited, but may be, for example, 99.8 weight % or less, and if it is greater than 99.8 weight %, the content of the binder may be relatively reduced, resulting in a somewhat reduced tensile strength.

Additionally, the solid electrolyte may be in the form of a particle, and the particle diameter (D50) thereof may be from 10 nm to 10 $\mu$m, more specifically, 10 nm or more, 100 nm or more, 300 nm or more, 500 nm or more, 800 nm or more, 1 $\mu$m or more, 2 $\mu$m or more, or 3 $\mu$m or more, 10 $\mu$m or less, 9 $\mu$m or less, 7 $\mu$m or less, or 5 $\mu$m or less. If the particle diameter (D50) of the solid electrolyte is less than 10 nm, the tensile strength may be reduced, and if it is more than 10 $\mu$m, the surface of the solid electrolyte film may not be uniform, and the resistance to the electrode may increase.

In an embodiment of the present disclosure, the sulfide-based solid electrolyte may be represented by Formula 1 below:

$$\text{<Formula 1>} \qquad L_{a1}M_{b1}P_{c1}S_{d1}A_{e1}$$

In Formula 1 above, L is an element selected from Li, Na, and K; M is an element selected from B, Zn, Sn, Si, Cu, Ga, Sb, Al, and Ge; A represents I, Br, Cl, or F; a1~e1 represents the composition ratio of each element; and a1:b1:c1:d1:e1 is 1~12:0~1:1:2-12:0-5.

For example, the sulfide-based solid electrolyte may comprise one or more selected from a group consisting of LiPSX (X = Cl, Br, or I) based solid electrolyte, LiGePS based solid electrolyte, and LiPS based solid electrolyte. However, the sulfide-based solid electrolyte is not limited thereto, and any sulfide-based solid electrolyte conventionally used in the art may be used. For example, LiPSX (X = Cl, Br, or I) may be $Li_6PS_5Cl$.

In an embodiment of the present disclosure, the halide-based solid electrolyte may be that represented by Formula 1 below:

$$\text{<Formula 2>} \qquad Li_{6-3a}M_aBr_bCl_c$$

In Formula 1 above, M is a metal other than Li, a is $0<a<2$, b is $0\leq b\leq 6$, c is $0\leq c\leq 6$, and $b+c=6$.

For example, the halide solid electrolyte may comprise one or more species selected from a group consisting of $Li_3YBr_6$, $Li_3YCl_6$, and $Li_3YBr_2Cl_4$.

In an embodiment of the present disclosure, the binder is fiberized during a dry process in which it is physically mixed and pressurized with the sulfide-based and/or halide-based solid electrolyte, and the fiberized binder may be dispersed and intertwined to form a cross-linked structure.

The binder may be one or more selected from a group consisting of polytetrafluoroethylene (PTFE) and copolymers thereof, but is not limited thereto, and binders with a property of low tensile strength, making them easily stretchable during the dry process, and capable of fiberizing to become fiberized binders, can be widely used.

Additionally, the binder may be comprised 2 weight % or less based on the total weight of the solid electrolyte film. Specifically, the content of the binder may be 2 weight % or less, 1.5 weight % or less, or 1 weight % or less. If the content of the binder is greater than 2 weight %, the ionic conductivity of the solid electrolyte film may be reduced. Additionally, while there is no specific lower limit of the binder, it may be, for example, 0.2 weight % or more, and if less than 0.2 weight %, it may result in some reduction in tensile strength.

**Method for Fabricating a Solid Electrolyte Film**

The present disclosure also relates to a method for fabricating a solid electrolyte film.

The method for fabricating a solid electrolyte film according to the present disclosure comprises the step of mixing a solid electrolyte with a binder. The solid electrolyte comprises one or more selected from a group consisting of sulfide-based solid electrolytes and halide-based solid electrolytes. The solid electrolyte may be in particulate form.

In this case, the type, content, and properties of the solid electrolyte and the binder are as described above.

Additionally, as the solid electrolyte and the binder are physically mixed without any chemical reaction, the mixing can be referred to as physical mixing. The mixing can be performed by agitation (mortar), ball mixing or roll pressing. In order to facilitate the fibrillization of the binder, conditions such as the mixing time, the number of repetitions, or the addition of a heating process may be set accordingly.

**All-solid-state Battery**

The present disclosure also relates to an all-solid-state battery comprising the solid electrolyte film.

The all-solid-state battery according to the present disclosure includes a solid electrolyte film; a positive electrode formed on one surface of the solid electrolyte film; and a negative electrode formed on the other surface of the solid electrolyte film.

In an embodiment of the present disclosure, the positive electrode may include positive-electrode active material, conductive material, and a binder.

In the present disclosure, a positive electrode included in the all-solid-state battery includes a positive-electrode active material layer, wherein the positive-electrode active material layer is formed on one surface of a positive electrode current collector.

The positive-electrode active material layer may include positive-electrode active material, conductive material, and a binder.

Additionally, the positive-electrode active material is not particularly limited as long as it can reversibly absorb and release lithium ions, and may include, for example, layered compounds or compounds substituted with one or more transition metals such as lithium cobalt oxide ($LiCoO_2$), lithium nickel oxide ($LiNiO_2$), $Li[Ni_xCo_yMn_zM_v]O_2$ (where M is selected from a group consisting of Al, Ga, and In; $0.3 \leq x < 1.0$, $0 \leq y$, $z \leq 0.5$, $0 \leq v \leq 0.1$, $x+y+z+v=1$), $Li(Li_aM_{b-a-b'}M'_{b'})O_{2-c}A_c$ (where $0 \leq a \leq 0.2$, $0.6 \leq b \leq 1$, $0 \leq b' \leq 0.2$, $0 \leq c \leq 0.2$; M includes one or more selected from Mn, Ni, Co, Fe, Cr, V, Cu, Zn and Ti; M' includes one or more selected from Al, Mg, and B; A includes one or more selected from P, F, S, and N); lithium manganese oxides such as $Li_{1+y}Mn_{2-y}O_4$ (where y ranges from 0 to 0.33), $LiMnO_3$, $LiMn_2O_3$, and $LiMnO_2$; lithium copper oxide ($Li_2CuO_2$); vanadium oxides such as $LiV_3O_8$, $LiFe_3O_4$, $V_2O_5$ and $Cu_2V_2O_7$; Ni site-type lithium nickel oxides represented by Formula $LiNi_{1-y}M_yO_2$ (where M=Co, Mn, Al, Cu, Fe, Mg, B or Ga, and y ranges from 0.01 to 0.3); lithium manganese composite oxides represented by Formula $LiMn_{2-y}M_yO_2$ (where M is Co, Ni, Fe, Cr, Zn or Ta, and y ranges from 0.01 to 0.1) or $Li_2Mn_3MO_8$ (where M is Fe, Co, Ni, Cu or Zn), lithium manganese oxide with a part of Li substituted by alkali earth metal ions; disulfide compounds; and $Fe_2(MoO_4)_3$, among others, but are not limited thereto.

Furthermore, the positive-electrode active material may be included in an amount of 60 to 80 weight % based on the total weight of the positive-electrode active material layer. Specifically, the content of the positive-electrode active material can be 60 weight % or more, 65 weight % or more, or 68 weight % or more, and 80 weight % or less, 75 weight % or less, or 72 weight % or less. If the content of the positive-electrode active material is less than 60 weight %, the performance of the battery may decrease, and if it exceeds 80 weight %, the transfer resistance of the material may increase.

Additionally, the conductive material is not particularly limited as long as it can prevent side reactions in the internal environment of the all-solid-state battery and does not induce chemical changes in the battery while providing excellent electrical conductivity. Typically, graphite or conductive carbon can be used. Also, for example, carbons such as natural graphite and artificial graphite, etc.; carbon blacks such as carbon black, acetylene black, Ketjen black, Denka black, thermal black, channel black, furnace black, lamp black and summer black, etc.; carbonaceous materials with a crystalline structure of graphene or graphite; conductive fibers such as carbon fiber and metal fiber, etc.; fluorinated carbon; metal powders such as aluminum powders and nickel powders, etc.; conductive whiskeys such as zinc oxide and potassium titanate, etc.; conductive oxides such as titanium oxide, etc.; and conductive polymers such as polyphenylene derivatives, etc., can be used alone or in combination, but are not limited thereto. Preferably, the conductive material may include vapor-grown carbon fiber (VGCF).

The conductive material can typically be included in an amount of 1 to 5 weight % based on the total weight of the positive-electrode active material layer, specifically 1 weight % or more, 1.5 weight % or more, or 2 weight % or more, and 5 weight % or less, 4.5 weight % or less, or 4 weight % or less. If the content of the conductive material is less than 1 weight %, it may be difficult to expect an improvement in electrical conductivity or the electrochemical properties of the battery may decrease, and if it exceeds 5 weight %, the amount of positive-electrode active material may relatively decrease, reducing the capacity and energy density of the battery. The method of including the conductive material in the positive electrode is not particularly limited and can be done using typical methods known in the field, such as mixing and coating with the positive-electrode active material.

Also, the binder assists in binding the positive-electrode active material and the conductive material, as well as binding to the current collector. The binder may include one or more selected from a group consisting of styrene-butadiene rubber, acrylic styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenol resin, epoxy resin, carboxymethyl cellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may include polytetrafluoroethylene (PTFE).

Additionally, the binder may be included in an amount of 0.5 to 4 weight % based on the total weight of the positive-electrode active material layer, specifically 0.5 weight % or more, 1 weight % or more, or 1.5 weight % or more, and 4 weight % or less, 3.5 weight % or less, or 3 weight % or less. If the content of the binder is less than 0.5 weight %, the adhesion between the positive-electrode active material and the positive electrode current collector may decrease, and if it exceeds 4 weight %, although adhesion may improve, the amount of positive-electrode active material may decrease, leading to lower battery capacity.

Furthermore, the positive electrode current collector supports the positive-electrode active material layer and transfers electrons between the external wiring and the positive-electrode active material layer.

The positive electrode current collector is not particularly limited as long as it does not induce chemical changes in the all-solid-state battery and has high electron conductivity. For example, copper, stainless steel, aluminum, nickel, titanium, palladium, graphitized carbon, copper or stainless steel surface treated with carbon, nickel, silver and aluminum-cadmium alloy, etc., can be used as the positive electrode current collector.

The positive electrode current collector may have fine undulated structures on its surface or adopt a three-dimensional porous structure to strengthen the binding with the positive-electrode active material layer. Thus, the positive electrode current collector may include various forms such as film, sheet, foil, mesh, net, porous body, foam and nonwoven fabric, etc.

The above-mentioned positive electrode can be fabricated using typical methods. Specifically, a composition for forming the positive-electrode active material layer can be prepared by mixing the positive-electrode active material, the conductive material, and the binder in an organic solvent, which is then applied and dried on the positive electrode current collector and optionally pressed to improve electrode density. The organic solvent used should be capable of uniformly dispersing the positive-electrode active material, the binder, and the conductive material and easily evaporate. Specifically, acetonitrile, methanol, ethanol, tetrahydrofuran, water and isopropyl alcohol, etc., can be used.

In the present invention, the negative electrode included in the all-solid-state battery comprises a negative-electrode active material layer, which can be formed on a surface of the negative electrode current collector. The negative-electrode active material can be a material capable of reversibly intercalating or deintercalating lithium (Li+), a material that reacts with lithium ions to reversibly form lithium-containing compounds, and may include lithium metal or lithium alloys.

The material capable of reversibly intercalating or deintercalating lithium ions may include, for example, crystalline carbon, amorphous carbon, or a mixture thereof. The material capable of reacting with lithium ions to reversibly form lithium-containing compounds may include, for example, tin oxide, titanium nitride, or silicon. The lithium alloy may include, for example, an alloy of lithium (Li) and one or more metals selected from a group consisting of indium (In), sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative-electrode active material may be lithium metal or a lithium-indium alloy (Li-in), specifically in the form of lithium metal or a thin film or powder form of lithium-indium alloy.

The negative-electrode active material may be included in an amount of 40 to 80 weight % based on the total weight of the negative-electrode active material layer. Specifically, the content of the negative-electrode active material can be 40 weight % or more, or 50 weight % or more, and 80 weight % or less or 70 weight % or less. If the content of the negative-electrode active material is less than 40 weight %, the connectivity between the wet and dry negative-electrode active material layers may be insufficient, and if it exceeds 80 weight %, transfer resistance of the material may increase.

Additionally, the binder in the negative-electrode active material layer is the same as described for the positive-electrode active material layer.

Also, the conductive material is as described for the positive-electrode active material layer.

Furthermore, the negative electrode current collector is not particularly limited as long as it is conductive and does not induce chemical changes in the battery. For example, the negative electrode current collector may be copper, stainless steel, aluminum, nickel, titanium, graphitized carbon, copper or stainless steel surface treated with carbon, nickel, titanium, silver and aluminum-cadmium alloy, etc., such as the positive electrode current collector, the negative electrode current collector can also have various forms as used in film, sheet, foil, net, porous body, foam and nonwoven fabric, etc., with fine undulated structures on its surface.

The method of manufacturing the negative electrode is not particularly limited and can be done using conventional layer or film formation methods used in the industry on the negative electrode current collector. For example, methods such as pressing, coating, and deposition can be utilized. Additionally, assembling the battery with the negative electrode current collector without a lithium thin film and then forming a metal lithium thin film on the metal plate during initial charging is also included in the scope of the negative electrode of the present disclosure.

**Method for Fabricating an All-Solid-State Battery**

The present disclosure also relates to a method for fabricating an all-solid-state battery. The method for fabricating an all-solid-state battery according to the present disclosure includes:

(P1) placing a mixture for forming a positive-electrode active material layer on a surface of the solid electrolyte film and pressing it to form a positive electrode on that surface of the solid electrolyte film; and
(P2) placing a negative electrode on the other surface of the solid electrolyte film and pressing it.

In step (P1) above, a mixture for forming a positive-electrode active material layer is placed on a surface of the solid electrolyte film and then hot pressed to form a positive electrode on that surface of the solid electrolyte film.

The mixture for forming a positive-electrode active material layer may include a positive-electrode active material, a conductive material, and a binder, as previously described. Additionally, after forming the positive-electrode active material layer, a collector can be attached to manufacture the positive electrode.

Furthermore, the pressing process is carried out to bond the solid electrolyte film and the positive electrode while reducing interface resistance, and can be performed at a pressure of 300 MPa to 500 MPa. The pressure during the hot pressing process can be 300 MPa or more, 350 MPa or more, or 400 MPa or more, and 500 MPa or less, 470 MPa or less, or 450 MPa or less. If the temperature and/or pressure of the hot pressing process is below these ranges, the solid electrolyte film and the positive electrode may not be integrated properly, and if it exceeds these ranges, the solid electrolyte film or the positive electrode may deform or damage.

In step (P2) above, a negative electrode is placed on the other surface of the solid electrolyte film and pressed to fabricate the all-solid-state battery. The negative electrode is as previously described.

The pressure during the pressing can be 40 MPa to 80 MPa, specifically 40 MPa or more, 45 MPa or more, or 50 MPa or more, and 80 MPa or less, 75 MPa or less, or 70 MPa or less. If the pressure is less than 40 MPa, the interface resistance between the negative electrode and the solid electrolyte film may increase, and if it exceeds 80 MPa, the solid electrolyte film or the negative electrode may deform or damage.

The all-solid-state battery fabricated in this way includes a thin solid electrolyte film, which can reduce the manufacturing cost while improving ion conductance and energy density. Additionally, the solid electrolyte and the positive electrode are integrated by the hot pressing process, which can enhance interface stability.

**Battery Module**

The present disclosure also relates to a battery module including the all-solid-state battery as a unit battery, a battery pack including the battery module, and a device including the battery pack as a power source.

Specific examples of such devices include power tools powered by battery motors; electric vehicles such as electric vehicles (EVs), hybrid electric vehicles (HEVs), plug-in hybrid electric vehicles (PHEVs); electric bicycles such as electric bicycles (E-bikes), electric scooters (E-scooters); electric golf carts; power storage systems, etc., but are not limited thereto. Hereinafter, preferred embodiments are presented to aid the understanding of the present invention. These embodiments are illustrative of the invention and are not intended to limit the scope and technical spirit of the invention. It is apparent to those skilled in the art that various changes and modifications can be made within the scope and spirit of the invention as set forth in the appended claims.

In one preferred embodiment of the present disclosure, the solid electrolyte film may comprise a solid electrolyte; and a fiberized binder,
wherein the solid electrolyte comprises one or more selected from the group consisting of a sulfide-based solid electrolyte and a halide-based solid electrolyte.

In one preferred embodiment of the present disclosure, the sulfide-based solid electrolyte may be represented by Formula 1:

$$\text{<Formula 1>} \qquad L_{a1}M_{b1}P_{c1}S_{d1}A_{e1}$$

wherein in Formula 1, L is an element selected from Li, Na, and K; M is an element selected from B, Zn, Sn, Si, Cu, Ga, Sb, Al and Ge; A is an element selected from I, Br, Cl and F; each of a1, b1, c1, d1 and e1 represents a composition ratio of each element; a ratio of a1:b1:c1:d1:e1 is 1 to12 : 0 to 1 : 1 : 2 to 12 : 0 to 5.

In one preferred embodiment of the present disclosure, the halide-based solid electrolyte may be represented by Formula 2:

$$\text{<Formula 2>} \qquad Li_{6-3a}M_aBr_bCl_c$$

wherein in Formula 2, M is a metal other than Li, a is 0<a<2, b is 0≤b≤6, c is 0≤c≤6, and b+c=6.

In one preferred embodiment of the present disclosure, the solid electrolyte may be included in an amount of 98 weight % or more based on a total weight of the solid electrolyte film.

In one preferred embodiment of the present disclosure, the fiberized binder comprises one or more selected from the group consisting of polytetrafluoroethylene (PTFE) and copolymers thereof.

In one preferred embodiment of the present disclosure, the fiberized binder may be included in an amount of 2 weight % or less based on a total weight of the solid electrolyte film.

In one preferred embodiment of the present disclosure, the fiberized binder may be included in the solid electrolyte film in a dispersed state.

In one preferred embodiment of the present disclosure, an interface of the solid electrolyte and the fiberized binder may be bonded.

In one preferred embodiment of the present disclosure, an ionic conductivity of the solid electrolyte film may be from 0.5 to 10 S/cm.

In one preferred embodiment of the present disclosure, the solid electrolyte film may have a tensile strength ranging from 45 to 1000 kPa.

In one preferred embodiment of the present disclosure, the solid electrolyte film may be solvent-free.

In one preferred embodiment of the present disclosure, the all-solid-state battery may comprise a positive electrode; a negative electrode; and

the solid electrolyte film of claim 1 between the positive electrode and the negative electrode.

Hereinafter, preferred embodiments are presented to aid the understanding of the present disclosure. These embodiments are illustrative of the invention and are not intended to limit the scope and technical spirit of the invention. It is apparent to those skilled in the art that various changes and modifications can be made within the scope and spirit of the invention as set forth in the appended claims. Such changes and modifications are also considered to be within the scope of the patent claims attached.

In the following examples and comparative examples, solid electrolyte films were fabricated according to the compositions and processes described in Table 1 below.

[Table 1]

| | Solid electrolyte film | | | | |
| | Sulfide-based solid electrolyte | Binders | | | Manufacture process |
| | | Matter | Shape | Content (weight%) | |
| Example 1 | $Li_6PS_5Cl$ | PTFE | Fibrous | 0.2 | Dry |
| Example 2 | $Li_6PS_5Cl$ | PTFE | Fibrous | 0.5 | Dry |
| Example 3 | $Li_6PS_5Cl$ | PTFE | Fibrous | 2 | Dry |
| Example 4 | $Li_6PS_5Cl$ | PTFE | Fibrous | 5 | Dry |
| Comparative Example 1 | $Li_6PS_5Cl$ | PTFE | Powder | 0.2 | Wet |
| comparative Example 2 | $Li_6PS_5Cl$ | NBR | Coating | 0.2 | Wet |
| Comparative Example 3 | $Li_6PS_5Cl$ | NBR | Coating | 5 | Wet |

**Example 1**

A solid electrolyte film with a thickness of 300 $\mu$m was fabricated by mixing $Li_6PS_5Cl$ powder, a sulfide-based solid electrolyte, with PTFE particles (polytetrafluoroethylene, Chemours) as a binder through ball milling. The obtained mixture was then calendared through roll pressing for 5 times.

**Example 2**

A solid electrolyte film was fabricated using the same method as in Example 1, except that the content of the binder was made to be 0.5 weight % based on the total weight of the solid electrolyte film.

**Example 3**

A solid electrolyte film was fabricated using the same method as in Example 1, except that the content of the binder was made to be 2 weight % based on the total weight of the solid electrolyte film.

**Example 4**

A solid electrolyte film was fabricated using the same method as in Example 1, except that the content of the binder was made to be 5 weight % based on the total weight of the solid electrolyte film.

**Comparative Example 1**

A solid electrolyte film was fabricated using the same method as in Example 1, except that the solid electrolyte film was fabricated in a wet process using a solvent.

For the above wet process, the solvent was a xylene solvent that is stable in a sulfide-based solid electrolyte.

A solution of PTFE particles, a binder, dissolved in a xylene solvent at a concentration of 5 weight % was prepared, and the mixture mixed with $Li_6PS_5Cl$ powder, a sulfide-based solid electrolyte, was coated on a polyethylene terephthalate (PET) release film with a doctor blade and vacuum dried at 100°C for 12 hours. The binder was made to be 0.2 weight % of the total weight of the solid electrolyte film.

**Comparative Example 2**

The solid electrolyte film was fabricated in the same manner as the wet process in Comparative Example 1, except that nitrile-butadiene rubber (NBR) was used instead of PTFE as the binder. NBR is a binder commonly used for wet process and is a solvent-soluble binder.

**Comparative Example 3**

The solid electrolyte film was fabricated in the same manner as in Comparative Example 2, except that the content of the binder, NBR, was 5 weight %.

**Experimental Example 1: Internal Structure of the Solid Electrolyte Film**

Experiments were conducted to confirm the internal structure of the solid electrolyte film fabricated in Example 1.

FIG. 2 is a Scanning Electron Microscope (SEM, FEI Apreo SEM) photograph of the solid electrolyte film fabricated in Example 1.

Referring to FIG. 2, the intertwined cross-linked structure of the solid electrolyte film of example1 is shown. It can be seen that the structure is formed by the intertwining of the fiberized binders after the binders fiberize during the drying process.

**Experimental Example 2: Measurement of Ionic Conductivity and Tensile Strength of the Solid Electrolyte Film**

To investigate the correlation between the content of the binder and the ion conductivity properties of the solid, the ionic conductivity of the solid electrolyte film was measured.

(1) Measurement of ionic conductivity

To measure the ionic conductivity of the solid electrolyte film, the solid electrolyte film was placed in a 10 mm diameter polyether ether ketone (PEEK) holder and a titanium rod was used as a blocking electrode to measure the ionic conductivity.

After measuring the resistance using an electrochemical impedance spectrometer (EIS, VM3, Bio Logic Science Instrument) at 25°C with an amplitude of 10 mV and a scan range of 1 Hz to 0.1 MHz, the ionic conductivity of the solid electrolyte film was calculated using Equation 1 below.

[Equation 1]

$$\sigma_i = \frac{L}{RA}$$

In the above Equation 1, $\sigma_i$ is the ionic conductivity (in milli-siemens per centimeter, mS/cm) of the solid electrolyte film, $R$ is the resistance (in ohms, $\Omega$) of the solid electrolyte film measured using the electrochemical impedance spectrometer, $L$ is the thickness (in micrometers, $\mu$m) of the solid electrolyte film, and A is the area (in square centimeters, $cm^2$) of the solid electrolyte film.

(2) Measurement of tensile strength

The solid electrolyte film was cut to a size of 10 mm x 50 mm. To minimize damage to the solid electrolyte film due to clamping during measurement, tape was applied to both ends of the sample, and the tensile strength was measured using a UTM(Universal Testing Machine, MARK-10, M5-05).

(3) Correlation of content of the binder with ionic conductivity and tensile strength

X, which represents the correlation between the content of the binder and the ionic conductivity as well as tensile strength, is calculated by Equation 2 below, and when X is from 170 to 1000, it is judged to be an excellent solid electrolyte film in terms of ionic conductivity and tensile strength:

[Equation 2]

$$X = (b * c) / a$$

In the above Equation 2, a is the content of binder in the solid electrolyte film, b is the ionic conductivity of the solid electrolyte film, and c is the tensile strength of the solid electrolyte film.

[Table 2]

| | Content of the binder (a, weight%) | Ionic conductivity (b, S/cm) | Tensile Strength (c, kPa) | X |
|---|---|---|---|---|
| Example1 | 0.2 | 2.125 | 50 | 531.25 |
| Example 2 | 0.5 | 1.865 | 120 | 447.6 |
| Example 3 | 2 | 1.26 | 300 | 189 |
| Example 4 | 5 | 0.865 | 800 | 138.4 |
| Comparative Example 1 | 0.2 | - | Cannot create film | - |
| comparative Example 2 | 0.2 | - | Cannot create film | - |
| Comparative Example 3 | 5 | 0.325 | 40 | 2.6 |

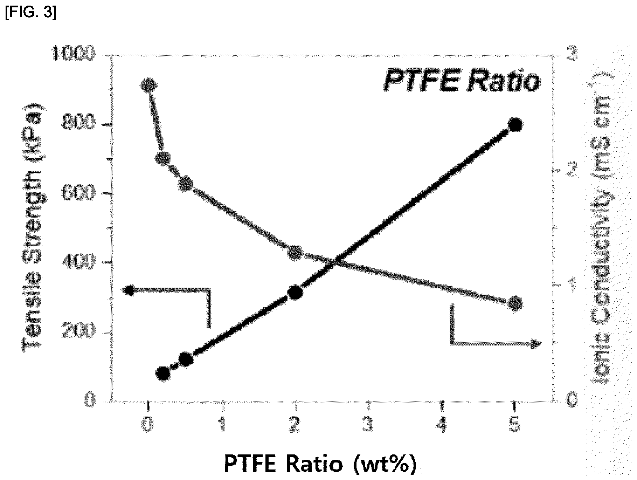

FIG. 3 is a graph showing the correlation between the content of the binder in the solid electrolyte film and ionic conductivity as well as tensile strength according to the examples of the present discolsure.
Referring to FIG. 3, it was found that the content of the binder and ionic conductivity are inversely proportional, and the content of the binder and tensile strength are proportional.
Example 1 and Comparative Example 1 are the fabrication of solid electrolyte films through dry process and wet process, respectively. In the wet process of Comparative Example 1, the PTFE was unable to fiberize and form a cross-linked structure, and therefore could not be fabricated into a film due to its weak strength.
In addition, Comparative Example 2 is a case where the solid electrolyte film fabrication process was performed by a wet process, such as a conventional slurry coating process, and the solid electrolyte film could not be fabricated in the form of a film due to the low content of NBR, a binder commonly used in wet processes, resulting in the lack of strength to function as a solid electrolyte film. Comparative Example 3, despite having a high content of NBR, a binder, was fabricated by a wet process and was found to have less strength and ionic conductivity than a solid electrolyte film fabricated by a dry process.
Although the present discolsure has been described above by means of limited embodiments and drawings, it is not limited thereto. Those skilled in the art with ordinary knowledge in the technical field to which the present discolsure belongs can make various modifications and variations within the scope of the claims below, in accordance with the technical concept of the present discolsure.

[Explanation of Reference Numerals]

1: Solid electrolyte film
10: (sulfide and/or halide based) solid electrolyte
20: Fiberized binder

**Claims**

1.  A solid electrolyte film comprising a solid electrolyte and a fiberized binder,
    wherein the solid electrolyte comprises one or more selected from the group consisting of a sulfide-based solid electrolyteand a halide-based solid electrolytes.

2.  The solid electrolyte film according to claim 1, wherein:

    the sulfide-based solid electrolyte is represented by Formula 1:

    <Formula 1>        $L_{a1}M_{b1}Pc_1S_{d1}A_{e1}$

    wherein in Formula 1, L is an element selected from Li, Na, and K; M is an element selected from B, Zn, Sn, Si, Cu, Ga, Sb, Al and Ge; A represents I, Br, Cl or F; a1 to e1 represents the composition ratio of each element; a1:b1:c1:d1:e1 is 1~12:0~1:1:2~12:0~5.

3.  The solid electrolyte film according to claim 1, wherein:

    the halide-based solid electrolyteis represented by Formula 2:

    <Formula 2>        $Li_{6-3a}M_aBr_bCl_c$

    wherein in Formula 2, M is a metal other than Li, a is 0<a<2, b is 0≤b≤6, c is 0≤c≤6, and b+c=6.

4.  The solid electrolyte film according to claim 1, wherein:
    the solid electrolyte is included in an amount of 98 weight % or more based on a total weight of the solid electrolyte film.

5.  The solid electrolyte film according to claim 1, wherein:
    the fiberized binder comprises one or more selected from the group consisting of polytetrafluoroethylene (PTFE) and copolymers thereof.

6.  The solid electrolyte film according to claim 1, wherein:
    the fiberized binder comprises 2 weight % or less based on a total weight of the solid electrolyte film.

7.  The solid electrolyte film according to claim 1, wherein:
    the fiberized binder is included in the solid electrolyte film in a dispersed state.

8.  The solid electrolyte film according to claim 1, wherein:
    an interface of the solid electrolyte and the fiberized binder is bonded.

9.  The solid electrolyte film according to claim 1, wherein:
    an ionic conductivity of the solid electrolyte film is from 0.5 to 10 S/cm.

10. The solid electrolyte film according to claim 1, wherein:
    the solid electrolyte film has a tensile strength ranging from 45 to 1000 kPa.

11. The solid electrolyte film according to claim 1, wherein:
    the solid electrolyte film is solvent-free.

**12.** An all-solid-state battery, comprising a positive electrode, a negative electrode, and the solid electrolyte film of claim 1 between the positive electrode and the negative electrode.

[FIG. 1]

[FIG. 2]

[FIG. 3]

## INTERNATIONAL SEARCH REPORT

International application No.

**PCT/KR2023/021461**

| A. | CLASSIFICATION OF SUBJECT MATTER |
|---|---|

**H01M 10/0562**(2010.01)i; **H01M 10/058**(2010.01)i; **C01B 25/14**(2006.01)i; **H01M 10/052**(2010.01)i

According to International Patent Classification (IPC) or to both national classification and IPC

| B. | FIELDS SEARCHED |
|---|---|

Minimum documentation searched (classification system followed by classification symbols)

H01M 10/0562(2010.01); H01M 10/052(2010.01); H01M 4/139(2010.01); H01M 4/36(2006.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전고체 전지(all solid state battery), 고체 전해질(solid electrolyte), 섬유상 바인더 (fiberized binder), 폴리테트라플루오로에틸렌(polytetrafluoroethylene, PTFE)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2022-514039 A (FRAUNHOFER-GESELLSCHAFT ZUR FOERDERUNG DER ANGEWANDTEN FORSCHUNG E.V. et al.) 09 February 2022 (2022-02-09)<br>See claims 1-4; and paragraphs [0008]-[0011], [0025], [0031] and [0032]. | 1-12 |
| A | KR 10-2022-0135535 A (LG ENERGY SOLUTION, LTD.) 07 October 2022 (2022-10-07)<br>See entire document. | 1-12 |
| A | WO 2022-050252 A1 (DAIKIN INDUSTRIES, LTD.) 10 March 2022 (2022-03-10)<br>See entire document. | 1-12 |
| A | KR 10-2022-0158925 A (HYUNDAI MOTOR COMPANY et al.) 02 December 2022 (2022-12-02)<br>See entire document. | 1-12 |
| A | JP 2012-227107 A (SUMITOMO ELECTRIC IND. LTD.) 15 November 2012 (2012-11-15)<br>See entire document. | 1-12 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 April 2024** | **01 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/021461**

| Patent document cited in search report | | | Publication date (day/month/year) | Patent family member(s) | | | Publication date (day/month/year) |
|---|---|---|---|---|---|---|---|
| JP | 2022-514039 | A | 09 February 2022 | DE | 102018222142 | A1 | 18 June 2020 |
| | | | | EP | 3900075 | A2 | 27 October 2021 |
| | | | | KR | 10-2021-0113995 | A | 17 September 2021 |
| | | | | US | 2022-0029242 | A1 | 27 January 2022 |
| | | | | WO | 2020-127223 | A2 | 25 June 2020 |
| | | | | WO | 2020-127223 | A3 | 13 August 2020 |
| KR | 10-2022-0135535 | A | 07 October 2022 | CN | 115485901 | A | 16 December 2022 |
| | | | | EP | 4135089 | A1 | 15 February 2023 |
| | | | | EP | 4135089 | A4 | 10 January 2024 |
| | | | | JP | 2023-525505 | A | 16 June 2023 |
| | | | | US | 2023-0223588 | A1 | 13 July 2023 |
| | | | | WO | 2022-211447 | A1 | 06 October 2022 |
| WO | 2022-050252 | A1 | 10 March 2022 | CN | 116057742 | A | 02 May 2023 |
| | | | | EP | 4210140 | A1 | 12 July 2023 |
| | | | | KR | 10-2023-0058153 | A | 02 May 2023 |
| | | | | TW | 202224237 | A | 16 June 2022 |
| | | | | US | 2023-0231182 | A1 | 20 July 2023 |
| | | | | WO | 2022-050252 | A1 | 10 March 2022 |
| KR | 10-2022-0158925 | A | 02 December 2022 | CN | 115394950 | A | 25 November 2022 |
| | | | | US | 2022-0393176 | A1 | 08 December 2022 |
| JP | 2012-227107 | A | 15 November 2012 | None | | | |

Form PCT/ISA/210 (patent family annex) (July 2022)

**EP 4 447 181 A1**

**REFERENCES CITED IN THE DESCRIPTION**

**Patent documents cited in the description**

- KR 1020220182670

- KR 20220095689